# EUROPÄISCHE PATENTSCHRIFT

(11) **EP 3 179 053 B1**
(45) Veröffentlichungstag und Bekanntmachung des Hinweises auf die Patenterteilung: **03.04.2019**
(21) Anmeldenummer: 15198252.7
(22) Anmeldetag: 07.12.2015
(51) Int. Cl.: F01D 9/04

(54) **GEHÄUSESTRUKTUR EINER STRÖMUNGSMASCHINE MIT HITZESCHUTZSCHILD**
CASING STRUCTURE OF A TURBOMACHINE WITH HEAT PROTECTION SHIELD
STRUCTURE DE CARTER DE TURBOMACHINE AVEC ÉCRAN DE PROTECTION THERMIQUE

(43) Veröffentlichungstag der Anmeldung: 14.06.2017
(73) Patentinhaber: MTU Aero Engines AG, 80995 München (DE)
(72) Erfinder: Kufner, Petra, 85586 Poing (DE); Gieg, Walter, 82223 Eichenau (DE)

(56) Entgegenhaltungen:
- EP-A1- 0 618 349
- EP-A1- 2 696 037
- EP-A1- 2 719 869
- EP-A1- 2 725 203
- EP-A1- 2 728 122
- US-A1- 2006 038 064

## Beschreibung

### HINTERGRUND DER ERFINDUNG

### GEBIET DER ERFINDUNG

Die vorliegende Erfindung betrifft eine Gehäusestruktur einer Strömungsmaschine bzw. eine entsprechende Strömungsmaschine mit einer derartigen Gehäusestruktur nach dem Oberbegriff des Anspruchs 1.

### STAND DER TECHNIK

Bei Strömungsmaschinen, wie stationären Gasturbinen oder Flugtriebwerken, wird der Strömungskanal, durch den das Fluid strömt, mit dem die Strömungsmaschine betrieben wird, durch einen Gehäusestruktur begrenzt, die aufgrund der im Strömungskanal herrschenden Bedingungen vielfältigen Anforderungen genügen muss. Da im Strömungskanal üblicherweise zum Teil sehr hohe Temperaturen auftreten, muss die den Strömungskanal außen umgebende Gehäusestruktur insbesondere dafür sorgen, dass die Temperaturunterschiede zwischen dem Strömungskanal und der Umgebung aufrechterhalten werden können, ohne dass das Gehäuse außen zu stark erwärmt wird. Entsprechend ist die Gehäusestruktur üblicherweise mindestens zweischalig mit einer inneren Gehäusewand und einer äußeren Gehäusewand aufgebaut, die aufgrund ihrer unterschiedlichen Abstände zum Strömungskanal unterschiedlich stark temperaturbelastet sind. Im Zwischenraum zwischen der äußeren und inneren Gehäusewand können Wärmedämmelemente und Hitzeschutzschilde vorgesehen sein und der Zwischenraum kann auch zur Führung eines Kühlfluids, wie Kühlluft, dienen. Entsprechend komplex kann der Aufbau der Gehäusestruktur sein.

Beispiele derartiger Gehäusestrukturen sind in der US 5,145,316 A oder WO 2015/084550 A1 angegeben. Bei der Gehäusestruktur, wie sie in der US 5,145,316 A gezeigt ist, besteht jedoch eine Problematik darin, dass durch eine direkte Anbindung der inneren Gehäusewand, die in Kontakt mit dem im Strömungskanal geführten Heißgas ist und im Bereich der Laufschaufeln durch eine sogenannte äußere Fluiddichtung (Outer Air Seal OAS) gebildet ist, an die äußere Gehäusewand eine starke Wärmeleitung in die äußere Gehäusewand stattfindet und eine hohe Wärmeleistung in die äußere Gehäusewand eingebracht wird, sodass die äußere Gehäusewand stark temperaturbelastet wird.

Bei der Gehäusestruktur der WO 2015/084550 A1 ist beim Gehäuse im Bereich der Laufschaufeln zwischen der OAS der inneren Gehäusewand und der äußeren Gehäusewand ein Hitzeschutzschild vorgesehen, welches im Abstand zur OAS und zur äußeren Gehäusewand angeordnet ist. Damit kann eine zusätzliche Abschirmung der äußeren Gehäusewand vor der Temperaturbelastung durch heißes Fluid im Strömungskanal erzielt werden. Allerdings ist die Hitzeabschirmung durch die von der OAS beabstandete Anordnung des Hitzeschutzschildes eingeschränkt und der Aufbau durch das Vorsehen mehrerer Zwischenräume in radialer Richtung zwischen OAS und äußerer Gehäusewand insbesondere für eine Kühlluftführung komplex. Darüber hinaus wird der Hitzeschutzschild zudem an der äußeren Gehäusewand gelagert, sodass auch hier eine Wärmeleitung nach außen erfolgen kann.

Eine Gehäusestruktur nach dem Oberbegriff von Anspruch 1 ist zudem aus der Druckschrift EP 2 728 122 A1, die auf die Anmelderin zurückgeht, bekannt. Bei dieser Gehäusestruktur weist der Hitzeschutzschild einen Abstandshalter auf, welcher sich von dem Hitzeschutzelement ausgehend in axialer Richtung nach gerade vorne weg erstreckt, um einen Abstand zwischen dem Sicherungsring des Leitschaufelsegments und dem Hitzeschutzelement zu überbrücken. Der Abstandshalter weist dabei eine Anlagefläche für den Sicherungsring des Leitschaufelsegments auf. Jedoch ist der Einbau der OAS mit dem daran befestigten Hitzeschutzschild und dem Abstandshalter nicht einfach.

### OFFENBARUNG DER ERFINDUNG

### AUFGABE DER ERFINDUNG

Es ist somit Aufgabe der vorliegenden Erfindung eine Verbesserung einer Gehäusestruktur einer Strömungsmaschine bereitzustellen, bei der sowohl die Abschirmung der im Strömungskanal vorliegenden Wärme gegenüber äußeren Gehäusewandbereichen verbessert wird, wobei gleichzeitig ein möglichst einfacher Aufbau der Gehäusewandstruktur realisiert werden soll, um einen einfachen und zuverlässigen Betrieb der Strömungsmaschine zu gewährleisten und den Zusammenbau der Strömungsmaschine zu vereinfachen.

### TECHNISCHE LÖSUNG

Diese Aufgabe wird gelöst durch eine Gehäusestruktur mit den Merkmalen des Anspruchs 1 sowie einer Strömungsmaschine mit den Merkmalen des Anspruchs 10. Vorteilhafte Ausgestaltungen sind Gegenstand der abhängigen Ansprüche.

Die Erfindung geht aus von der Erkenntnis, dass die oben beschriebene technische Aufgabenstellung durch ein Hitzeschutzschild gelöst werden kann, welches einerseits möglichst nah an der inneren Gehäusewand in Form einer OAS angeordnet werden kann, wobei gleichzeitig ein ausreichend dimensionierter Zwischenraum zwischen der inneren Gehäusewand und einer äußeren Gehäusewand für die Anordnung von Wärmedämmelementen und die Führung von Kühlfluid bereitgestellt werden soll. Darüber hinaus soll der erfindungsgemäße Hitzeschutzschild zusätzliche Funktionen hinsichtlich der Positionierung von Komponenten der Gehäusewandstruktur übernehmen, um einen einfachen Aufbau einer Gehäusewandstruktur zu erzielen.

Entsprechend wird bei einer im Bereich der Laufschaufeln angeordneten Gehäusestruktur einer Strömungsmaschine mit einer äußeren Gehäusewand und einer inneren Gehäusewand, die beabstandet zueinander den Strömungskanal der Strömungsmaschine umlaufend an der Außenseite des Strömungskanals umgeben, ein Hitzeschutzschild zwischen der äußeren Gehäusewand und der inneren Gehäusewand, die durch eine OAS gebildet wird, vorgesehen, welches neben einem flächigen Hitzeschutzelement, das an der OAS anliegt, zusätzlich mehrere in Umfangsrichtung um den Strömungskanal zueinander beabstandete Abstandshalter aufweist, die so an dem Hitzeschutzelement angeordnet sind, dass sie sich in radialer Richtung nach außen zur äußeren Gehäusewand erstrecken um zusätzlich einen Sicherungsring eines benachbarten Leitschaufelsegments formflüssig zu halten. Durch die mehreren in Umfangsrichtung zueinander beabstandeten Abstandshalter kann erreicht werden, dass das Hitzeschutzelement neben der Hitzeabschirmung zusätzlich die Funktion eines Positionierelements für einen Sicherungsring eines benachbarten Leitschaufelsegments übernehmen kann ohne die Hitzeschutzwirkung zu beeinträchtigen, da das flächige Hitzeschutzelement unabhängig von den Abstandshaltern entlang der inneren Gehäusewand ausgebildet sein kann. Durch die zusätzliche Haltefunktion des Hitzeschutzschildes wird der Aufbau der Gehäusestruktur vereinfacht. Darüber hinaus bewirkt die in Umfangsrichtung beabstandete Anordnung mehrerer Abstandshalter und die damit einhergehende Beschränkung der Abstandshalter auf wenige Bereiche des Umfangs des Strömungskanals, dass eine geringe Wärmeleitung in Richtung der äußeren Gehäusewand erfolgt. Zugleich bewirkt die lokale Anordnung der Abstandshalter in Teilbereichen des Umfangs um den Strömungskanal der Strömungsmaschine und die Anordnung des Hitzeschutzschildes an der OAS, dass ein nahezu ungehinderter Fluss eines Kühlfluids im Zwischenraum zwischen der inneren Gehäusewand, d.h. der OAS, und der äußeren Gehäusewand erfolgen kann.

Die Hitzeschutzschilder der erfindungsgemäßen Gehäusestruktur können segmentweise in Umfangsrichtung nebeneinander angeordnet sein, um eine Ringstruktur zu bilden, sodass die einzelnen Hitzeschutzschilder in Umfangsrichtung Kreissegmente darstellen.

Die Hitzeschutzschilder weisen flächige Hitzeschutzelemente auf, die sich neben der Ausdehnung in Umfangsrichtung um den Strömungskanal der Strömungsmaschine herum in axialer Richtung erstrecken, sodass durch die axiale Richtung und die Umfangsrichtung ein flächiges Hitzeschutzelement definiert ist, dessen Hauptflächen durch die axiale Richtung und die Umfangsrichtung aufgespannt sind.

Die axiale Richtung wird hierbei durch die axiale Drehachse der Laufschaufeln der Strömungsmaschine definiert, um die sich die Laufschaufeln drehen. Entsprechend stellt die Umfangsrichtung die Richtung umlaufend um die axiale Richtung dar, während die radiale Richtung senkrecht zur axialen Richtung definiert ist.

Das flächige Hitzeschutzelement des Hitzeschutzschildes weist somit zwei gegenüberliegende Hauptflächen auf, die durch die axiale Richtung und die Umfangsrichtung definiert sind, während die Stirnseiten des flächigen Hitzeschutzelements durch die radiale Richtung und die Umfangsrichtung bzw. die radiale Richtung und die axiale Richtung definiert sind.

Auf dem flächigen Hitzeschutzschild sind die mehreren Abstandshalter insbesondere am Rand des Hitzeschutzschildes in radialer Richtung vorgesehen, beispielsweise drei bis sieben Abstandshalter pro Hitzeschutzschild, die in radialer Richtung von dem Hitzeschutzelement hervorstehen.

Die Abstandshalter weisen in Umfangsrichtung eine Dimensionierung auf, sodass sie lediglich einen Anteil des Hitzeschutzschildes in Umfangsrichtung von weniger als 30 %, insbesondere weniger als 10 % und vorzugsweise weniger als 5 % der Länge des Hitzeschutzschildes in Umfangsrichtung einnehmen.

Radial beabstandet von dem flächigen Hitzeschutzelement stellen die Abstandshalter eine Anlagefläche für einen Sicherungsring eines benachbarten Leitschaufelsegment bereit, wobei sich die Anlagefläche sowohl in Umfangsrichtung als auch in axialer Richtung erstreckt.

In axialer Verlängerung der Anlagefläche des Abstandshalters ist an diesem ein gebogener Abschnitt vorgesehen, bei dem die Anlagefläche des Abstandshalters in Richtung eines benachbarten Leitschaufelsegments verläuft und in Richtung des Hitzeschutzelements gebogen ist, sodass eine einfache Montage des Hitzeschutzschildes möglich ist.

Der Hitzeschutzschild kann mit dem flächigen Hitzeschutzelement vollflächig oder zumindest zu 60 %, vorzugsweise mehr als 75 % und insbesondere mehr als 90 % der Fläche des Hitzeschutzelements an der OAS bzw. einer Trägerstruktur der OAS, an der eine Dichtstruktur bzw. ein Einlaufbelag angeordnet ist, anliegen. Dadurch kann eine besonders gute Hitzeschutzwirkung in radialer Richtung erzielt werden.

### KURZBESCHREIBUNG DER FIGUREN

Die beigefügten Zeichnungen zeigen in rein schematischer Weise in
- Fig. 1: eine teilweise Schnittdarstellung durch eine äußere Gehäusestruktur einer Strömungsmaschine mit der Schnittebene parallel zur axialen Richtung der Strömungsmaschine gemäß der vorliegenden Erfindung,
- Fig. 2: ein weiteres Beispiel einer erfindungsgemäßen Gehäusestruktur in einer Darstellung ähnlich der der Figur 1 und in
- Fig. 3: eine axiale Draufsicht auf ein erfindungsgemäßes Hilfsschutzschild, wie es in der Figur 2 gezeigt ist.

### AUSFÜHRUNGSBEISPIELE

Weitere Vorteile, Kennzeichen und Merkmale der vorliegenden Erfindung werden bei der nachfolgenden detaillierten Beschreibung der Ausführungsbeispiele deutlich. Allerdings ist die Erfindung nicht auf diese Ausführungsbeispiele beschränkt.

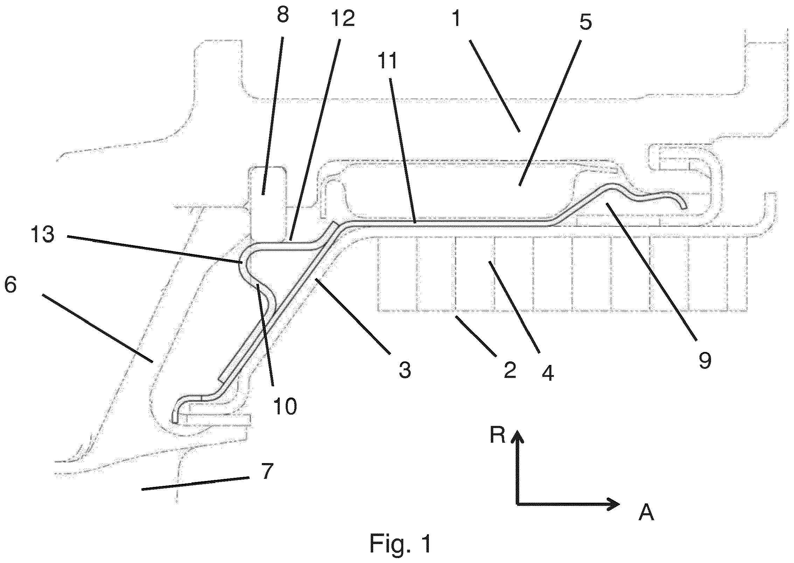

Die Fig. 1 zeigt in einer Schnittdarstellung einen Teil einer äußeren Gehäusestruktur eines Flugtriebwerks, wobei die axiale Richtung A und die radiale Richtung R mit entsprechenden Pfeilen angegeben sind. Die axiale Richtung A ist durch die Drehachse definiert, um die sich die Laufschaufeln (nicht gezeigt) der Strömungsmaschine drehen. Um einen möglichst geringen Strömungsverlust zwischen den Enden der Laufschaufel und der den Strömungskanal umgebenden Gehäusestruktur zu erzielen, können die Spitzen der Laufschaufeln an einer Dichtstruktur 4 anstreifen, dem sogenannten Einlaufbelag, der Teil der äußeren Fluiddichtung (Outer Air Seal OAS) 2 ist, die aus einem Dichtungsträger 3 und der Dichtstruktur 4 bzw. dem Einlaufbelag aufgebaut ist.

Die OAS 2 bildet die innere Wand der den Strömungskanal umgebenden äußeren Gehäusestruktur, während die äußere Gehäusestruktur nach außen durch eine Außenwand 1 abgeschlossen wird. Zwischen der äußeren Wand 1 und der OAS 2 ist ein Zwischenraum vorgesehen, in dem verschiedene Komponenten, wie ein Hitzeschutzschild 9, ein Wärmedämmelement 5 und dergleichen angeordnet sind, wobei zugleich der Zwischenraum zwischen der äußeren Wand 1 und der OAS 2 auch zum Durchströmen von Kühlluft Verwendung findet, um den hohen Temperaturunterschied zwischen den im Strömungskanal geführten Fluiden und der äußeren Umgebung zu realisieren.

In axialer Richtung A benachbart zur OAS 2 ist ein Leitschaufelsegment 6 mit Leitschaufeln 7 angeordnet, das in axialer Richtung A von einem Sicherungsring 8 gehalten wird.

Wie sich aus der Darstellung der Fig. 1 ergibt, erstreckt sich der erfindungsgemäße Hitzeschutzschild 9 in axialer Richtung A nahezu über die gesamte axiale Erstreckung der OAS 2 und liegt in weiten Teilen unmittelbar an der OAS 2 bzw. deren Dichtungsträger 3 vollflächig an. Lediglich an den axialen Enden des Hitzeschutzschildes 9 ist dieses so ausgebildet, dass es in wenigen Bereichen beabstandet von der OAS 2 bzw. deren Dichtungsträger 3 angeordnet ist, um beispielsweise andere Bauteile zu umgreifen oder in diese einzugreifen, um dadurch fixiert zu werden. Der Hitzeschutzschild 9 kann somit wirksam einen Temperaturgradienten einstellen, der eine deutliche Temperaturabnahme von der OAS 2 in Richtung der äußeren Gehäusewand 1 und somit im Wesentlichen in radialer Richtung R verursacht.

Gleichzeitig kann der erfindungsgemäße Hitzeschutzschild 9 in einfacher Weise an der OAS 2 gehalten werden und den Sicherungsring 8 formschlüssig in radialer Position halten, da mehrere, in Umfangsrichtung beabstandet angeordnete Abstandshalter 10 vorgesehen sind.

Der erfindungsgemäße Hitzeschutzschild 9 der Ausführungsform gemäß der Fig. 1 umfasst somit ein flächiges Hitzeschutzelement 11 sowie mehrere, in Umfangsrichtung beabstandet angeordnete Abstandshalter 10, die sich von dem flächigen Hitzeschutzelement 11 in radialer Richtung R nach außen zur äußeren Gehäusewand 1 erstrecken und eine Anlagefläche 12 bereitstellen, an der ein Sicherungsring 8 des benachbarten Leitschaufelsegments 6 anliegen kann. Da die Abstandshalter 10 zusätzlich zum flächigen Hitzeschutzelement 11 in radialer Richtung R oberhalb von diesem angeordnet sind und in Umfangsrichtung um die axiale Drehachse der Laufschaufel herum nur eine begrenzte Erstreckung aufweisen, die einem Bruchteil der Erstreckung des Hitzeschutzschildes 9 bzw. des flächigen Hitzeschutzelements 11 in Umfangsrichtung entspricht, kann sichergestellt werden, dass durch die Abstandshalter 10 keine übermäßige Wärmeleitung in Richtung der äußeren Gehäusewand 1 stattfindet und zudem ausreichend Zwischenraum zwischen der äußeren Gehäusewand 1 und der OAS 2 vorhanden ist, die für die Strömung von Kühlfluid genutzt werden kann. Damit ist ein multifunktionales Hitzeschutzschild 9 gegeben, welches sowohl die effektive Abschirmung der äußeren Gehäusewand 1 vor der im Strömungskanal herrschenden Hitze bewirkt als auch gleichzeitig die radiale Positionierung des Sicherungsrings 8 ermöglicht, ohne die Hitzeschutzfunktion hinsichtlich der Wärmeübertragung als auch der örtlichen Ausdehnung des Hitzeschutzschildes 9 zu beeinträchtigen.

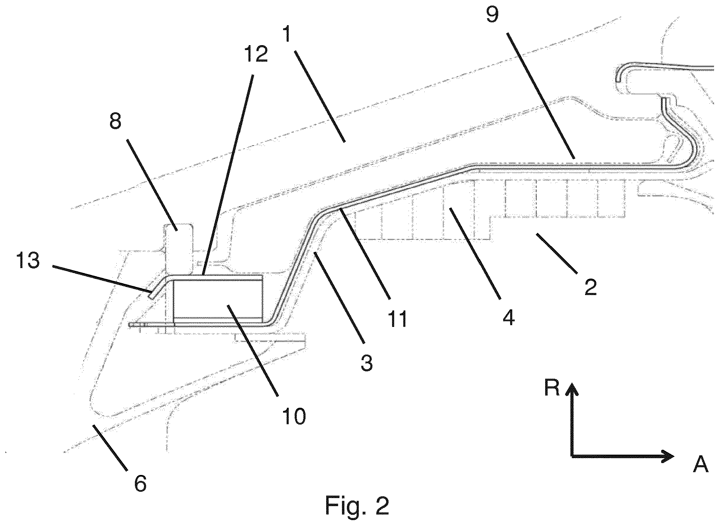

Die Fig. 2 zeigt eine zweite Ausführungsform eines erfindungsgemäßen Hitzeschutzschildes 9, wobei bei der zweiten Ausführungsform der Figur 2 identische oder ähnliche Komponenten mit denselben Bezugszeichen versehen sind.

Der erfindungsgemäße Hitzeschutzschild 9 nach Fig. 2 weist auch in dieser Ausführungsform ein flächiges Hitzeschutzelement 11 sowie mehrere in Umfangsrichtung verteilt und beabstandet zueinander angeordnete Abstandshalter 10 auf, die sich vom flächigen Hitzeschutzelement 11 in radialer Richtung R erstrecken. Auch bei dieser Ausführungsform ist zu sehen, dass der Hitzeschutzschild 9 mit seinem flächigen Hitzeschutzelement 11 nahezu vollflächig an dem Dichtungsträger 3 der OAS 2 anliegt. Die Abstandshalter 10 stellen auch bei diesem Ausführungsbeispiel eine Anschlagfläche 12 zur Verfügung, an der der Sicherungsring 8 des Leitschaufelsegments 6 anliegt. Auch die Abstandshalter 10 der Ausführungsform der Fig. 2 weisen einen sich in axialer Richtung erstreckenden gebogenen Abschnitt 13 auf, bei dem die Biegung der Anschlagfläche 12 in Richtung radial nach innen zum Strömungskanal erfolgt, um ein einfaches Einziehen des Hitzeschutzschildes 9 unter dem Sicherungsring 8 zu ermöglichen.

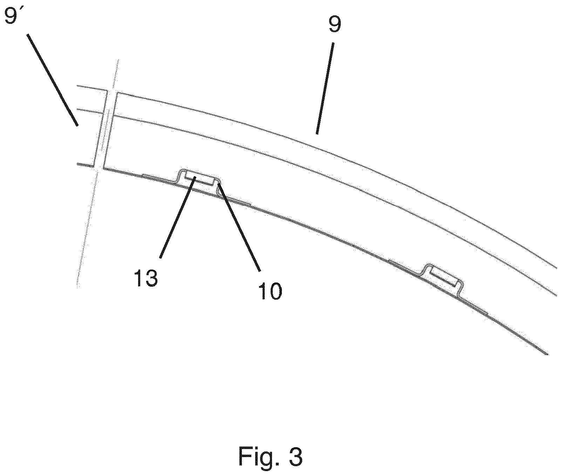

Die Fig. 3 zeigt zwei benachbarte Hitzeschutzschilde 9, 9' in teilweiser axialer Draufsicht, d. h. mit der axialen Richtung senkrecht zur Bildebene. Aus der Fig. 3 ist zu erkennen, dass die Hitzeschutzschilde als Segmente ausgeführt sein können, die benachbart zueinander angeordnet in Umfangsrichtung eine vollumfängliche Umrandung des Strömungskanals darstellen. In der Umfangsrichtung stellen somit die Hitzeschutzschilder 9, 9' Kreissegmente dar. In der Darstellung der Fig. 3 ist auch gut zu erkennen, dass die Abstandselemente 10 in Umfangsrichtung um den Strömungskanal beabstandet zueinander angeordnet sind und bezüglich des Umfangs nur in einem Bruchteil des Umfangs vorgesehen sind.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass Abwandlungen in der Weise möglich sind, dass einzelne Merkmale weggelassen oder andersartige Kombinationen von Merkmalen verwirklicht werden können, solange der Schutzbereich der beigefügten Ansprüche nicht verlassen wird. Die Offenbarung der Erfindung schließt sämtliche Kombinationen der vorgestellten Einzelmerkmale mit ein.

### BEZUGSZEICHENLISTE

- 1: äußere Gehäusewand
- 2: äußere Fluiddichtung (outer air seal OAS)
- 3: Dichtungsträger
- 4: Einlaufbelag bzw. Dichtstruktur
- 5: Wärmedämmelement
- 6: Leitschaufelsegment
- 7: Leitschaufel
- 8: Sicherungsring
- 9: Hitzeschutzschild
- 10: Abstandshalter
- 11: flächiges Hitzeschutzelement
- 12: Anlagefläche
- 13: gebogener Abschnitt

## Patentansprüche

1. Gehäusestruktur einer Strömungsmaschine mit einer äußeren Gehäusewand (1) und einer inneren Gehäusewand, die beabstandet zueinander den Strömungskanal der Strömungsmaschine umlaufend an der Außenseite des Strömungskanals umgeben, wobei im Bereich der Laufschaufeln der Strömungsmaschine, die sich um eine axiale Achse der Strömungsmaschine drehen, die innere Gehäusewand der Gehäusestruktur von einer OAS (2) gebildet wird, wobei zwischen der äußeren Gehäusewand (1) und der OAS (2) ein Hitzeschutzschild (9) ausgebildet ist, welches an der OAS anliegt und ein flächiges Hitzeschutzelement (11) umfasst, und wobei in axialer Richtung parallel zur axialen Achse benachbart zur OAS an der inneren Gehäusewand ein Leitschaufelsegment (6) angeordnet ist, welches in seiner axialen Position durch einen Sicherungsring (8) gesichert ist, der an der äußeren Gehäusewand angeordnet ist,
**dadurch gekennzeichnet, dass**
der Hitzeschutzschild in Umfangsrichtung mehrere in Umfangsrichtung zueinander beabstandete Abstandshalter (10) aufweist, die sich zusätzlich zu und in radialer Richtung außerhalb des Hitzeschutzelements (11) befinden und den Abstand zwischen dem Sicherungsring (8) des Leitschaufelsegments und dem Hitzeschutzelement (11) überbrücken, und jeweils eine Anlagefläche (12) für den Sicherungsring (8) des Leitschaufelsegments aufweisen,
wobei an den Abstandshaltern (10) in Verlängerung der Anlagefläche (12) ein gebogener Abschnitt (13) vorgesehen ist, der in Richtung des Leitschaufelsegments (6) verläuft und in Richtung des Hitzeschutzelements (11) gebogen ist.

2. Gehäusestruktur nach Anspruch 1,
**dadurch gekennzeichnet, dass**
mehrere Hitzeschutzschilde (9) segmentweise in Umfangsrichtung nebeneinander angeordnet sind, um eine Ringstruktur zu bilden.

3. Gehäusestruktur nach einem der vorhergehenden Ansprüche,
**dadurch gekennzeichnet, dass**
der Hitzeschutzschild (9) sich in axialer Richtung erstreckt, wobei die Abstandshalter in axialer Richtung an einem Rand des Hitzeschutzschildes angeordnet sind.

4. Gehäusestruktur nach einem der vorhergehenden Ansprüche,
**dadurch gekennzeichnet, dass**
das Hitzeschutzelement (11) flächig ausgebildet ist, sich in axialer Richtung und in Umfangsrichtung um den Strömungskanal erstreckt und in axialer Richtung und Umfangsrichtung eine Hauptfläche definiert, wobei die Abstandselemente (10) auf der Hauptfläche angeordnet sind.

5. Gehäusestruktur nach einem der vorhergehenden Ansprüche,
**dadurch gekennzeichnet, dass**
3 bis 7 Abstandshalter pro Hitzeschutzschild (9) angeordnet sind.

6. Gehäusestruktur nach einem der vorhergehenden Ansprüche,
**dadurch gekennzeichnet, dass**
die Abstandshalter (10) in Umfangrichtung einen Anteil des Hitzeschutzschildes (9) von weniger als 30 %, insbesondere weniger als 10 %, vorzugsweise weniger als 5 % der Länge des Hitzeschutzschildes (9) in Umfangsrichtung einnehmen.

7. Gehäusestruktur nach einem der vorhergehenden Ansprüche,
**dadurch gekennzeichnet, dass**
sich die Anlagefläche (12) für den Sicherungsring (8) des Leitschaufelsegments in axialer Richtung beabstandet vom Hitzeschutzelement (11) erstreckt.

8. Gehäusestruktur nach einem der vorhergehenden Ansprüche,
**dadurch gekennzeichnet, dass**
der Hitzeschutzschild (9) vollflächig oder zumindest zu 60 %, vorzugsweise mehr als 75 %, insbesondere mehr als 90 % der Fläche der OAS an dieser anliegt.

9. Gehäusestruktur nach einem der vorhergehenden Ansprüche,
**dadurch gekennzeichnet, dass**
die OAS (2) eine Trägerstruktur (3) und eine Dichtstruktur (4) umfasst.

10. Strömungsmaschine mit einer Gehäusestruktur nach einem der vorhergehenden Ansprüche.

## Claims

1. Housing structure of a turbomachine, comprising an outer housing wall (1) and an inner housing wall which are mutually spaced so as to surround the flow channel of the turbomachine circumferentially on the outer side of the flow channel, the inner housing wall of the housing structure being formed by an OAS (2) in the region of the rotor blades of the turbomachine, which blades rotate about an axial axis of the turbomachine, a heat shield (9) being formed between the outer housing wall (1) and the OAS (2), which shield abuts the OAS and comprises a planar heat protection element (11), and a guide vane segment (6) being arranged in the axial direction in parallel with the axial axis and adjacent to the OAS on the inner housing wall, which segment is secured in the axial position thereof by a retaining ring (8) which is arranged on the outer housing wall,
**characterized in that**
the heat shield has, in the circumferential direction, a plurality of circumferentially mutually spaced spacers (10) which are positioned in addition to and radially outside of the heat protection element (11), which bridge the spacing between the retaining ring (8) of the guide vane segment and the heat protection element (11), and which each have a contact surface (12) for the retaining ring (8) of the guide vane segment, a bent portion (13) being provided on the spacers (10) as an extension of the contact surface (12), which portion extends in the direction of the guide vane segment (6) and is bent in the direction of the heat protection element (11).

2. Housing structure according to claim 1, **characterized in that** a plurality of heat shields (9) are arranged so as to be adjacent to one another in the manner of segments in the circumferential direction in order to form a ring structure.

3. Housing structure according to either of the preceding claims, **characterized in that** the heat shield (9) extends in the axial direction, the spacers being arranged in the axial direction at an edge of the heat shield.

4. Housing structure according to any of the preceding claims, **characterized in that** the heat protection element (11) is planar, extends around the flow channel in the axial direction and in the circumferential direction and defines a main surface in the axial direction and circumferential direction, the spacer elements (10) being arranged on the main surface.

5. Housing structure according to any of the preceding claims, **characterized in that** 3 to 7 spacers are arranged per heat shield (9).

6. Housing structure according to any of the preceding claims, **characterized in that** the spacers (10), in the circumferential direction, occupy a portion of the heat shield (9) of less than 30%, in particular less than 10%, preferably less than 5%, of the length of the heat shield (9) in the circumferential direction.

7. Housing structure according to any of the preceding claims, **characterized in that** the contact surface (12) for the retaining ring (8) of the guide vane segment extends in the axial direction at a distance from the heat protection element (11).

8. Housing structure according to any of the preceding claims, **characterized in that** the heat shield (9) abuts the entire surface or at least 60%, preferably more than 75%, in particular more than 90%, of the surface of the OAS.

9. Housing structure according to any of the preceding claims, **characterized in that** the OAS (2) comprises a support structure (3) and a sealing structure (4).

10. Turbomachine comprising a housing structure according to any of the preceding claims.

## Revendications

1. Structure de carter de turbomachine muni d'une paroi de carter extérieure (1) et d'une paroi de carter intérieure, qui entourent, à distance l'une de l'autre, le canal d'écoulement de la turbomachine en circulation sur le côté extérieur du canal d'écoulement, la paroi de carter intérieure de la structure de carter étant constituée d'un joint à air de pale (OAS) (2) dans la zone des aubes directrices de la turbomachine qui tournent autour d'un axe axial de la turbomachine, un bouclier thermique (9) étant constitué entre la paroi de carter extérieure (1) et l'OAS (2), lequel bouclier thermique repose sur l'OAS et comprend un élément de protection thermique de forme plane (11), et un segment d'aube directrice (6) étant disposé dans une direction axiale parallèlement à l'axe axial adjacent à l'OAS sur la paroi de carter intérieure, lequel segment est fixé dans sa position axiale par une bague d'arrêt (8), laquelle est disposée sur la paroi de carter extérieure,
**caractérisée en ce que**
le bouclier thermique présente, dans une direction circonférentielle, plusieurs éléments d'écartement (10) écartés les uns des autres dans une direction circonférentielle, lesquels éléments d'écartement se trouvent en outre dans une direction radiale à l'extérieur de l'élément de bouclier thermique (11) et pontent l'écart entre la bague d'arrêt (8) du segment d'aube directrice et l'élément de bouclier thermique (11), et présentent chacun une surface d'appui (12) pour la bague d'arrêt (8) du segment d'aube directrice, une section incurvée (13) étant prévue au niveau des éléments d'écartement (10) dans le prolongement de la surface d'appui (12), laquelle section s'étend en direction du segment d'aube directrice (6) et est incurvée en direction de l'élément de bouclier thermique (11).

2. Structure de carter selon la revendication 1, **caractérisée en ce que** plusieurs boucliers thermiques (9) sont disposés côte à côte dans la direction circonférentielle par segments pour former une structure de bague.

3. Structure de carter selon l'une des revendications précédentes, **caractérisée en ce que** le bouclier thermique (9) s'étend dans une direction axiale, les éléments d'écartement étant disposés dans une direction axiale au niveau d'un bord du bouclier thermique.

4. Structure de carter selon l'une des revendications précédentes, **caractérisée en ce que** l'élément de bouclier thermique (11) est conçu de manière plane, s'étend dans une direction axiale et dans une direction circonférentielle autour du canal d'écoulement, et définit une surface principale dans une direction axiale et une direction circonférentielle, les éléments d'écartement (10) étant disposés sur la surface principale.

5. Structure de carter selon l'une des revendications précédentes, **caractérisée en ce que** de 3 à 7 éléments d'écartement sont disposés pour chaque bouclier thermique (9).

6. Structure de carter selon l'une des revendications précédentes, **caractérisée en ce que** les éléments d'écartement (10) occupent, dans une direction circonférentielle, une proportion du bouclier thermique (9) inférieure à 30 %, en particulier inférieure à 10 %, de préférence inférieure à 5 % de la longueur du bouclier thermique (9) dans une direction circonférentielle.

7. Structure de carter selon l'une des revendications précédentes, **caractérisée en ce que** la surface d'appui (12) pour la bague d'arrêt (8) du segment d'aube directrice s'étend dans une direction axiale à distance de l'élément de bouclier thermique (11).

8. Structure de carter selon l'une des revendications précédentes, **caractérisée en ce que** le bouclier thermique (9) repose sur l'OAS sur toute sa surface ou au moins sur 60 %, de préférence plus de 75 %, en particulier plus de 90 % de la surface de l'OAS.

9. Structure de carter selon l'une des revendications précédentes, **caractérisée en ce que** l'OAS (2) comprend une structure de support (3) et une structure d'étanchéité (4).

10. Turbomachine munie d'une structure de carter selon l'une des revendications précédentes.
